# EUROPÄISCHE PATENTSCHRIFT

(11) **EP 3 699 462 B1**
(45) Veröffentlichungstag und Bekanntmachung des Hinweises auf die Patenterteilung: **06.12.2023**
(21) Anmeldenummer: 20159110.4
(22) Anmeldetag: 24.02.2020
(51) Int. Cl.: F16K 1/42, F16K 27/02, F16K 3/24

(54) **VENTILSITZ-KÄFIGANORDNUNG**
VALVE SEAT CAGE ARRANGEMENT
AGENCEMENT DE CAGE DE SIÈGE DE SOUPAPE

(30) Priorität: 22.02.2019 DE 102019104589
(43) Veröffentlichungstag der Anmeldung: 26.08.2020
(73) Patentinhaber: Samson Aktiengesellschaft, 60314 Frankfurt (DE)
(72) Erfinder: SANDER, Andreas, 69514 Laudenbach (DE); MERSCHER, Michael, 63322 Roedermark (DE)
(74) Vertreter: Puschmann Borchert Kaiser Klettner Patentanwälte Partnerschaft mbB

(56) Entgegenhaltungen:
- EP-A1- 2 435 740
- EP-A1- 3 058 255
- EP-A1- 3 431 841
- WO-A1-2011/008379
- WO-A1-2016/058874
- US-A1- 2006 048 826
- US-A1- 2012 319 027
- US-A1- 2014 264 135
- US-B2- 7 854 239
- US-B2- 9 732 873

## Beschreibung

Die Erfindung betrifft eine Ventilsitz-Käfiganordnung zum Einsatz in einem Ventil insbesondere in einem Ventil, das zum Einsatz bei sehr niedrigen oder sehr hohen Fluidtemperaturen des Prozessfluids bestimmt ist.

Bei einem gattungsgemäßen Ventil zur Steuerung eines Prozessfluids, auch Käfigventil genannt, ist im Übergang von einer Zufluss- und einer Abfluss-Seite eines Ventils ein Ventilkäfig eingebracht, in dem ein axial beweglicher Kolben geführt ist, der über seine Position die Öffnungsweite des Käfigs bestimmt. In bekannter Weise ist zur Positionsveränderung der Kolben linear beweglich an einen Antrieb des Ventils angebunden. Ferner umfasst ein solches Ventil neben dem Ventilkäfig auch einen Ventilsitz, der das Ventil in einer Schließstellung, bei der der Kolben in Anlage mit dem Ventilsitz gelangt, abdichtet.

Gerade bei Ventilen, die mit extremen Fluidtemperaturen betrieben werden und die dazu einen großen Abstand zwischen dem eigentlichen Ventil und dem Antrieb aufweisen, ist es vorteilhaft, den Ventilsitz mit dem Ventilkäfig zu verbinden, so dass diese bei der Montage gemeinsam als Ventilsitz-Käfiganordnung in das Ventilgehäuse eingesetzt werden können.

Die US 2014/0264135 A1 offenbart ein solches Ventil mit einer Ventilsitz-Käfiganordnung umfassend einen Ventilkäfig und eine Ventilsitz, wobei der Ventilsitz in den Ventilkäfig eingeschraubt wird. Der Ventilsitz wird gegenüber dem Ventilkäfig zentriert. Dazu ist ein Zentrierungsabschnitt vorgesehen, der entgegen der Einschraubrichtung liegt.

Diese Anordnung hat den Nachteil, dass das Gewinde in Einschraubrichtung für das Prozessfluid zugänglich ist, was dazu führt, dass das Gewinde dem Prozessfluid ausgesetzt ist, wodurch, insbesondere bei der Verwendung von aggressiven Medien, das Gewinde schwerer lösbar wird.

Die EP 3 058 255 A1 offenbart ein Käfigventil mit einem Ventilsitz, bei dem der ein Ventilsitz in einen Ventilkäfig eingeschraubt ist, wobei ein Verschraubungsbereich zwischen einem Anschlussbereich und einer Dichtschulter die von Ventilsitz und Ventilkäfig gebildet wird liegt. Der Anschlussbereich weist eine Zentrierfunktion auf.

Es ist Aufgabe der Erfindung eine Ventilsitz-Käfiganordnung anzugeben, bei dem die Verbindung zwischen dem Ventilkäfig und dem Ventilsitz besser geschützt ist.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst die Ventilsitz-Käfiganordnung einen Ventilkäfig und einen Ventilsitz, wobei der Ventilsitz in den Ventilkäfig einschraubbar ist.

Der Ventilkäfig weist einen Anschlussbereich auf, der einen Ventilkäfiganschlussinnendurchmesser aufweist, in den ein Ventilsitz mit seinem Ventilsitzanschlussaußendurchmesser beim Zusammenbau von Ventilsitz und Ventilkäfig eingreift. Ferner weisen Ventilsitz und Ventilkäfig einen Verschraubungsbereich auf, wobei der Verschraubungsbereich zwischen dem Anschlussbereich und einer Schulter liegt, an der der Ventilsitz und der Ventilkäfig mit einer axialen Anpresskraftkomponente aneinandergedrückt werden, wodurch eine durch die Anlage an der Schulter endgültige Einschraubposition definiert ist.

In bekannter Weise liegt der Verschraubungsbereich zwischen dem Anschlussbereich und der Schulter, wobei ferner vorgesehen ist, dass der Ventilkäfiganschlussinnendurchmesser und der Ventilsitzanschlussaußendurchmesser in einer Passung aufeinander abgestimmt, so dass die Zentrierung von Ventilkäfig und Ventilsitz über den Anschlussbereich erfolgt.

Insbesondere ist die Passung eine Spielpassung von H/h bis zu einem maximalen Spiel von 0,05 mm.

Durch diese erfindungsgemäße Ausgestaltung ergibt sich sowohl ein Schutz durch eine verbesserte Abdichtung an dem Ventilkäfig zugewandten Ende des Ventilsitzes im ersten Anschlussbereich als auch eine Zentrierung zwischen Ventilkäfig und Ventilsitz während der Verschraubung von Ventilsitz mit dem Ventilkäfig. Da der Ventilsitz so weit in den Ventilkäfig geschraubt werden kann, bis die korrespondierenden Schultern des Ventilsitzes und des Ventilkäfigs aneinandergepresst sind, kann eine axiale Abdichtung erfolgen.

Auf diese Weise wird ein verbesserter beidseitiger Schutz des Gewindes erreicht und natürlich gleichzeitig eine Abdichtung des Übergangs zwischen Zu- und Abflussseite des Ventils über den Übergang zwischen Ventilsitz und Ventilkäfig gewährleistet. Da nach der Erfindung das Gewinde kaum mehr dem Prozessfluid ausgesetzt ist, kann auch nach dem Einsatz von aggressiven Medien die Verbindung zwischen Ventilkäfig und Ventilsitz einfacher wieder gelöst werden.

Insbesondere liegt der Anschlussbereich des Ventilsitzes an der dem Ventilkäfig zugewandten Seite des Schraubbereichs.

Insbesondere kann der Ventilsitz an seinem dem Ventilkäfig zugewandten Ende an seinem Außendurchmesser eine Fase aufweisen. Dies erleichtert die Zusammenführung von Ventilsitz und Ventilkäfig während der Verschraubung.

Bevorzugt ist die Passung derart gewählt, dass eine Verbindung ist. Dies sorgt für eine zuverlässige Zentrierung zwischen Ventilsitz und Ventilkäfig und erlaubt eine entsprechende Schutz des Gewindes.

Gemäß einer weiteren bevorzugten Ausgestaltung ist die Wandstärke des Ventilsitzes im Anschlussbereich geringer als im Schraubbereich. Dadurch wirkt sich der Druck innerhalb der Ventilsitz-Käfiganordnung auf den Anschlussbereich derart aus, dass dieser radial nach außen gedrückt wird, wodurch der Spalt verringert wird und Schutz im Anschlussbereich erhöht wird.

Der Innendurchmesser des Anschlussbereichs kann derart auf den folgenden Innendurchmesser des Ventilkäfigs abgestimmt sein, dass diese den gleichen Innendurchmesser aufweisen. Da der axiale Anschlag vom Anschlussbereich jenseits des Verschraubungsbereichs liegt, entsteht ein Spalt zwischen Ventilkäfig und Anschlussbereich. Da der Querschnitt der Durchgangsöffnung wesentlich größer ist als der Querschnitt des Spalts, ergibt sich, dass aufgrund des Venturi-Effekts das Prozessfluid, während das Ventil durchströmt wird nicht in den Spalt eindringt.

Gemäß einer weiteren bevorzugten Ausgestaltung kann der Ventilkäfig und / oder der Ventilsitz einen Dichtbereich aufweisen, in dem ein separates umlaufendes Dichtungselement angeordnet ist, das eine Abdichtung zwischen dem Ventilkäfig und dem Ventilgehäuse im Übergangsbereich herstellt, Gemäß einer weiteren bevorzugten Ausgestaltung kann der Ventilkäfig im Dichtbereich von seiner Außenwandung radial nach innen rückspringend mit reduzierter Wandstärke ausgeführt sein, so dass das separate Dichtungselement, den Ventilkäfig umgreift.

Durch die Reduzierung der Wandstärke des Ventilkäfigs entsteht ein freier Bereich zwischen dem Ventilkäfig und dem Ventilgehäuse im Übergangsbereich, der in axialer Richtung auf der einen Seite durch den Ventilkäfig begrenzt ist und auf der anderen Seite durch den Ventilsitz, wobei der den Freiraum für das Dichtungselement begrenzende Bereich des Ventilsitzes als Dichtungsschulter bezeichnet wird. In diesen Freiraum ist das separate Dichtungselement eingesetzt, das an seinem Innendurchmesser dem Außendurchmesser im Bereich der reduzierten Wandstärke angepasst ist. Durch das Dichtungselement wird die Abdichtung zwischen dem Ventilkäfig und dem Ventilgehäuse hergestellt. Das separate Dichtungselement wird in Axialrichtung dann von dem Ventilkäfig und dem Ventilsitz begrenzt. Sie kann auf diese Weise gemeinsam zusammen mit Ventilsitz und Ventilkäfig in das Ventilgehäuse eingesetzt und entnommen werden.

Die Dichtungsschulter kann dabei durch die Schulter des Ventilsitzes gebildet sein, die eine axiale Dichtung mit dem Ventilkäfig herstellt. Der Ventilsitz weist dann eine ringförmige Anlagefläche auf, die in einem radial äußeren Bereich den Freiraum für das Dichtungselement begrenzt und in einem radial weiter innen liegenden Bereich an dem Ventilkäfig anliegt.

Gemäß einer weiteren Ausgestaltung kann die Dichtungsschulter auch im Anschluss an einen Freiraum im Ventilsitz gebildet sein, der rückspringend von einem Außendurchmesser, der auf das Ventilgehäuse im Übergangsbereich abgestimmt ist, zu einem geringeren Außendurchmesser zur Herstellung eines Freiraums, gebildet ist. Der Außendurchmesser im Freiraum ist auf den Innendurchmesser des Dichtungselements abgestimmt, so dass das separate Dichtungselement zwischen dem Ventilgehäuse und dem Ventilsitz aufgenommen werden kann.

Sowohl der Ventilsitz, als auch der Ventilkäfig können einen Freiraum aufweisen, der auf das Dichtungselement derart abgestimmt ist, so dass das Dichtungselement sowohl bereichsweise radial am Ventilsitz als auch am Ventilkäfig anliegt.

Erfindungsgemäß weist das Dichtungselement einen ersten Innendurchmesser auf, der dem Durchmesser entspricht, der auf den Durchmesser des Ventilkäfigs im rückspringenden Bereich abgestimmt ist und das einen weiteren flanschartigen Bereich aufweist, der sich in einen Bereich erstreckt der durch die im Ventilsitz angeordnete rückspringende Schulter, die einen geringeren Außendurchmesser als der Durchmesser des rückspringenden Bereichs des Ventilkäfigs aufweist, gebildet ist.

Auf diese Weise kann der flanschartige Dichtungsbereich als axiale Dichtung zwischen dem Ventilkäfig und dem Ventilsitz wirken, da der flanschartige Bereich zwischen Ventilkäfig und Ventilsitz komprimiert wird und als axiale Dichtung zwischen dem Ventilkäfig und dem Ventilsitz wirkt.

Das Dichtungselement ist ringförmig ausgebildet und weist insbesondere einen U- bzw. V- förmig Querschnitt auf. Die Öffnung kann entweder in Richtung des Ventilkäfigs ausgerichtet sein oder vom Ventilkäfig abgewandt liegen. Die Lage wird je nachdem bestimmt, ob das Ventil für eine sogenannte "flow-to-close" oder "flow-to-open" Anwendung vorgesehen ist. Die Öffnung wird dabei gegen die Strömungsrichtung gerichtet.

Gemäß einem weiteren Aspekt der Erfindung betrifft diese, ein Ventil, umfassend einen Ventildeckel und ein Ventilgehäuse, wobei das Ventilgehäuse einen Zufluss- und einen Abfluss- Anschluss und einen Übergangsbereich mit einer zentralen Ausnehmung zwischen Zufluss- und Abfluss- Anschluss aufweist, wobei eine zuvor beschriebene Ventilsitz-Käfiganordnung in das Ventilgehäuse eingesetzt ist. Der Ventilkäfig ist derart in das Ventilgehäuse eingesetzt, dass der Übergangsbereich des Ventilgehäuses mit dem Dichtungsbereich überlappt, wobei ein Kolben innerhalb des Ventilkäfigs geführt ist, der zusammen mit dem Ventilsitz eine Abdichtlage einnehmen kann.

Bevorzugt ist der Ventilkäfig mit einem Haltering verschraubt, der wiederrum mit dem Ventilgehäuse verschraubt ist, wobei der Haltering den Ventilkäfig zentriert, und diesen so hält, dass der Dichtungsbereich der Ventilsitz-Käfig Anordnung im Übergangsbereich des Ventilgehäuses liegt.

Ferner kann das Ventilgehäuse im Bereich des Übergangsbereichs eine Schulter aufweisen. An dieser Schulter kann sich der Ventilsitz mit seinem dem Ventilkäfig abgewandten Ende in Axialrichtung abstützen, so dass die Ventilsitz-Käfiganordnung zwischen der Schulter und einem Ventilgehäusedeckel geklemmt gehalten werden kann.

Die Schulter kann auch als Löseschutz für den Sitz dienen, wenn der Ventilkäfig über einen zuvor beschriebenen Haltering derart verbunden ist, dass dieser in die Ausnehmung des Übergangsbereichs des Ventilgehäuses ragt.

Die Ventilsitz-Käfiganordnung kann beispielsweise unmittelbar durch den Ventildeckel geklemmt werden oder auch durch eine in das Ventilgehäuse eingeschraubten Haltering.

Das Ventil weist als Ventil für extreme Temperaturen insbesondere ein Ventilgehäuse auf, bei dem der Abstand von Ventilsitz zum Ventildeckel insbesondere mehr als das 4-fache des Übergangsbereichsdurchmessers beträgt.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines Ventils,
- Fig. 2: eine vergrößerte Detailansicht einer Ventilsitz-Käfiganordnung in einem Ventil, gemäß einer nicht erfindungsgemäßen ersten Ausgestaltung;
- Fig. 3: eine vergrößerte Detailansicht einer Ventilsitz-Käfiganordnung in einem Ventil, gemäß einer erfindungsgemäßen Ausgestaltung;
- Fig. 4: eine vergrößerte Detailansicht einer Ventilsitz-Käfiganordnung in einem Ventil, gemäß einer erfindungsgemäßen dritten Ausgestaltung;
- Fig. 5: eine vergrößerte Detailansicht einer Ventilsitz-Käfiganordnung in einem Ventil, gemäß einer nicht erfindungsgemäßen vierten Ausgestaltung;
- Fig. 6a: eine vergrößerte Detailansicht einer Ventilsitz-Käfiganordnung in einem Ventil, gemäß einer night erfindungsgemäßen fünften Ausgestaltung, und
- Fig. 6b: eine vergrößerte Detailansicht einer Ventilsitz-Käfiganordnung in einem Ventil, gemäß einer nicht erfindungsgemäßen sechsten Ausgestaltung ähnlich Fig. 6a.

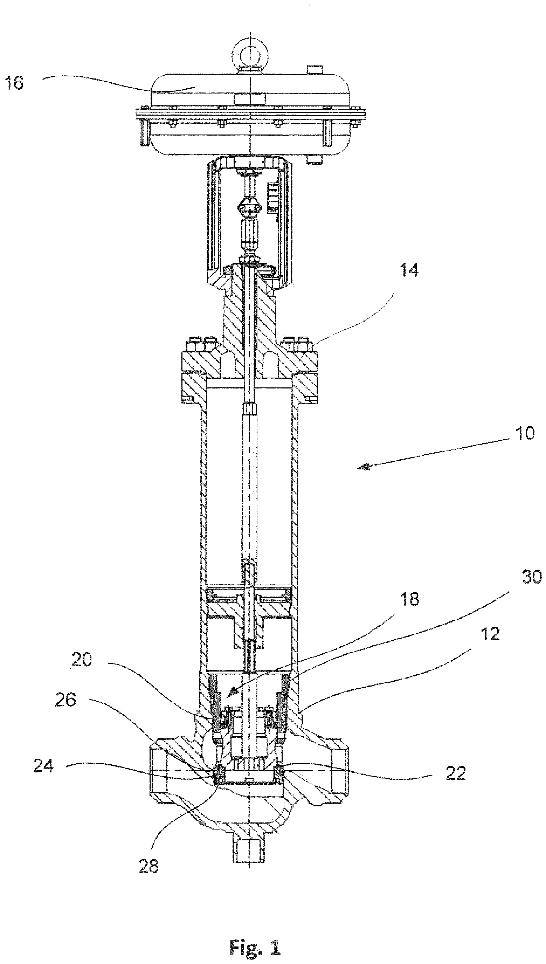

Fig.1 zeigt ein Ventil 10, das ein Ventilgehäuse 12, einen Ventildeckel 14 und einen Antrieb 16 umfasst. In das Ventil 10 ist eine erfindungsgemäße Ventilsitz-Käfiganordnung 18 eingesetzt. Die Ventilsitz-Käfiganordnung 18 umfasst dabei einen Ventilkäfig 20, einen Ventilsitz 22 und einen separaten Dichtungsring 24. Das Ventilgehäuse 12 weist im Übergang von seiner Abfluss- zur Zuflussseite einen Übergangsbereich 26 auf. Der Übergangsbereich 26 umgreift sowohl den Ventilkäfig 20 als auch den Ventilsitz 22 umfänglich. Die Ventilsitz-Käfiganordnung 18 ist an einer Gehäuseschulter 28, die im Übergangsbereich des Ventilgehäuses 12 eingebracht ist, abgestützt und durch eine Klemmschraube 30 in Position gehalten. Fig. 1 zeigt ein Ventil 10, dass für Prozessfluide mit extremer Temperatur eingesetzt wird. Insoweit erstreckt sich das Ventilgehäuse 12 in Richtung des Antriebs 16 über einen ausgedehnten Bereich, sodass der Antrieb 16 insbesondere wenigstens um den vierfachen Übergangsbereichs-Durchmesser vom Übergangsbereich beabstandet ist.

In den folgenden Figuren wird im Detail auf die Ventilsitz-Käfiganordnung näher eingegangen. Dieselben Bauteile sind mit den gleichen Bezugszeichen versehen, obwohl sie unterschiedliche Ausführungen betreffen.

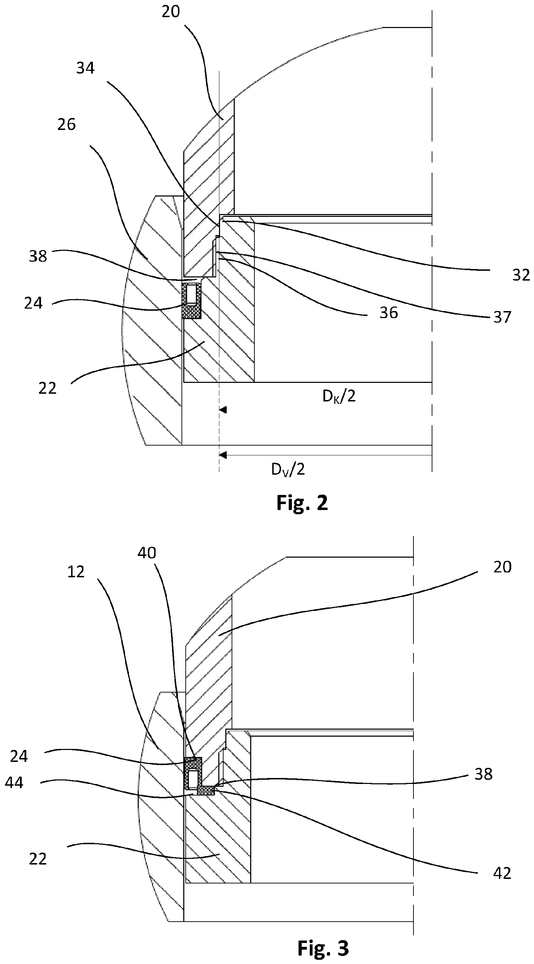

So zeigt Fig. 2 eine vergrößerte Ansicht des Übergangsbereichs 26 in einer nicht erfindungsgemäßen Ausgestaltung und die dort vorgesehene Ausbildung des Ventilgehäuses 12, sowie abschnittsweise den Ventilkäfig 20, den Ventilsitz 22 und die Dichtungsring 24. Die detaillierte Ausgestaltung wird im Folgenden näher erläutert.

Der Ventilkäfig 20 und der Ventilsitz 22 weisen jeweils einen Anschlussbereich auf, mit dem sie im zusammengebauten Zustand ineinandergreifen. So weist der Ventilkäfig 20 in seinem Anschlussbereich 32 einen Ventilkäfiganschlussinnendurchmesser D_{K} auf. Darauf abgestimmt weist der Ventilsitz in seinem Anschlussbereich 34 einen Ventilsitzanschlussaußendurchmesser D_{V} auf. D_{K} und D_{V} sind derart aufeinander abgestimmt, dass sich im Anschlussbereich 32, 34 zwischen dem Ventilkäfig 20 und dem Ventilsitz 22 eine Spielpassung ergibt. Zudem weisen der Ventilkäfig 20 und der Ventilsitz 22 in dem Verschraubungsbereich 37 ein korrespondierendes Gewinde 36 auf, sodass der Ventilsitz 22 mit dem Ventilkäfig 20 verschraubt werden kann. Das Gewinde 36 liegt zwischen dem Anschlussbereich 32, 34 und einer Schulter 38 mit der der Ventilsitz 22 gegen den Ventilkäfig 20 drückt und einen axialen Anschlag bildet. Durch diese Anordnung wird im verschraubten Zustand der Ventilsitz 22 derart mit dem Ventilkäfig 20 verbunden, dass sich zum einen eine radiale Abdichtung bei einem Spalt von 0-0,05mm im Anschlussbereich 32, 34 und zum anderen eine axiale Abdichtung zwischen der Schulter 38 und dem Ventilkäfig 20 ergibt. Dies hat zur Folge, dass das Gewinde 36 beidseitig vom Prozessfluid abgetrennt ist. Dadurch wird eine Verschmutzung oder Beschädigung des Gewindes 36 reduziert.

Der Ventilkäfig 20 und der Ventilsitz 22 weisen im Wesentlichen denselben Außendurchmesser auf und sind mit ihrem Einsteckbereich in den Übergangsbereich des Gehäuses eingesteckt. Der Ventilsitz 22 weist ausgehend von seinen maximalen Außendurchmesser einen Rücksprung auf, der einen umlaufenden Freiraum im Bereich des Ventilsitzes 22 bildet. In diesen Freiraum ist ein Dichtungsring 24 eingesetzt. Der Dichtungsring 24 weist einen U- förmigen Querschnitt auf und ist im vorliegenden Beispiel mit seiner Öffnung in Richtung des Ventilkäfigs 20 ausgerichtet. Auf diese Weise wird der Übergang zwischen dem Übergangsbereich 26 des Ventilgehäuses und der Ventilsitz-Käfiganordnung 18 abgedichtet, sodass eine Leckage zwischen dem Zu- und Abflussbereich vermieden wird.

Fig. 3 zeigt eine Ausführungsform einer erfindungsgemäßen Ventilsitz-Käfiganordnung 18. Im Unterschied zu Fig. 2 weist der Ventilkäfig 20 in dieser Ausführungsform eine rückspringende Ausnehmung 40 auf, sodass das als Dichtungsring 24 ausgebildete Dichtungselement zwischen dem Ventilkäfig und dem Ventilgehäuse 12 aufgenommen werden kann. Gemäß dieser speziellen Ausführung, weist der Dichtungsring 24 einen flanschartigen Bund 42 auf, der sich radial nach ihnen erstreckt. Der Ventilsitz 22 weist eine Schulter 38 zur Anlage am Ventilkäfig 20 auf, wobei axial beabstandet eine weitere Schulter, nämlich eine Dichtungsschulter 44 vorgesehen ist, die den flanschartigen Bund 42 des Dichtungsrings 24 zwischen dem Ventilsitz 22 und dem Ventilkäfig 20 hält.

Dies sorgt zum einen dafür, dass der Dichtungsring 24 nicht nur ein radialer Richtung, sondern auch in Axialrichtung festgelegt ist und zum anderen für eine verbesserte Abdichtung des Übergangs zwischen Ventilkäfig 20 und Ventilsitz 22. Die Öffnung des Dichtungsrings 24 ist in Richtung des Ventilsitzes ausgerichtet.

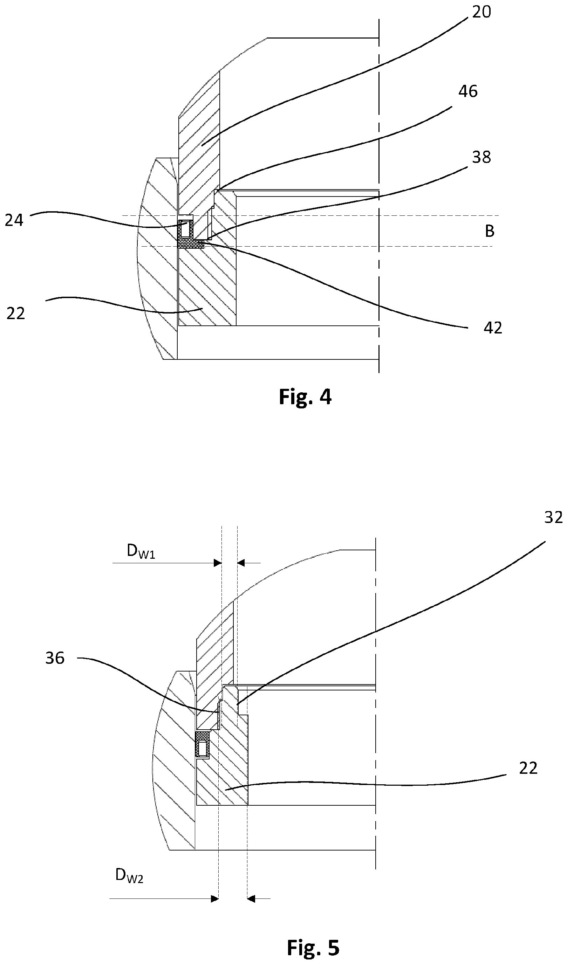

Fig. 4 zeigt im Wesentlichen die gleiche Ausgestaltung wie Fig. 3, wobei der Dichtungsring 24 die Öffnung in Richtung des Ventilkäfigs 20 gerichtet hat. Auch in Fig. 4 ist wie auch in den anderen Figuren 2-5 vorhanden, die Fase 46 am Ende des Anschlussbereichs 34 des Ventilsitzes 22 zu erkennen. Diese erleichtert die Zusammenführung der Anschlussbereiche 32,34.

Fig. 5 zeigt eine ähnliche nicht erfindungsgemäße Ausgestaltung wie Fig. 2, wobei im Unterschied zu Fig. 2 der Ventilsitz 22 im Anschlussbereich 32 eine geringere Anschlussbereichs-Wandstärke D_{W1} aufweist als die Gewindebereichs-Wandstärke D_{W2} im Bereich des Gewindes 36. Diese Ausgestaltung führt dazu, dass der Druck des Prozessfluid innerhalb des Ventilsitzes 22 den Anschlussbereich 32 radial nach außen drückt und die Dichtwirkung im Anschlussbereich 32,34 weiter verbessert.

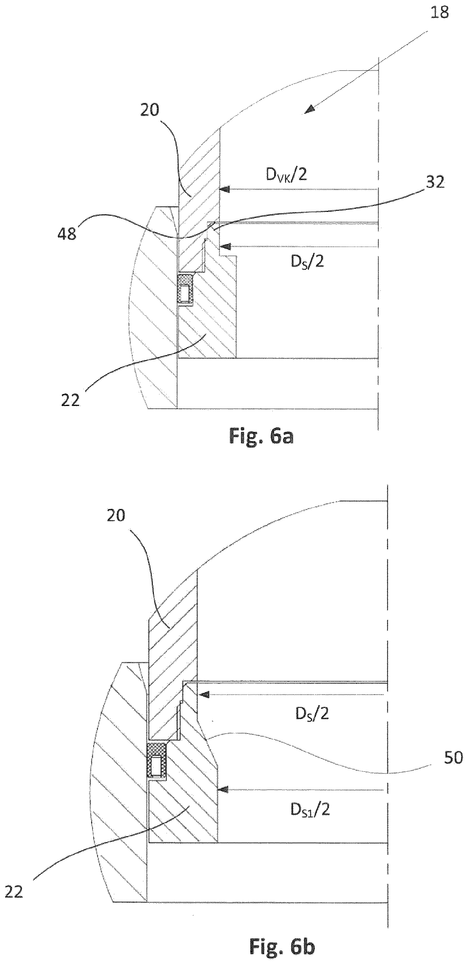

Fig. 6a und Fig. 6b zeigen eine ähnliche nicht erfindungsgemäße Ausgestaltung einer Ventilsitz-Käfig Anordnung 18, wobei der Anschlussbereich 32 des Ventilsitzes 22 im Übergang zum Ventilkäfig einen Innendurchmesser D_{S} aufweist, der in etwa dem Innendurchmesser des Ventilkäfigs D_{VK} im an den Anschlussbereich angrenzenden Bereich entspricht. Aufgrund des Anschlags ergibt sich ein Spalt 48 zwischen dem Ventilsitz und dem Ventilkäfig. Aufgrund der entsprechenden Abstimmung der Innendurchmesser D_{S} und D_{VK} ergibt sich, dass während das Ventil geöffnet ist, aufgrund des Venturi-Effekts, das Prozessfluid nur schlecht in den Spalt eindringen kann, da die Größe des Spalts im Vergleich zum Durchmesser D_{VK} sehr gering ist.

Die Ausführungsform gemäß Fig. 6b weist einen konischen Übergang 50 von einem ersten Innendurchmesser D_{S1} des Ventilsitzes 22 zu dem im Anschlussbereich 32 vorgesehenen Innendurchmesser D_{S} auf. Dies wirkt sich vorteilhaft auf das Strömungsverhalten des Prozessfluids im Übergangsbereich aus.

### Bezugszeichenliste

- 10: Ventil
- 12: Ventilgehäuse
- 14: Ventildeckel
- 16: Antrieb
- 18: Ventilsitz-Käfiganordnung
- 20: Ventilkäfig
- 22: Ventilsitz
- 24: Dichtungsring
- 26: Übergangsbereich
- 28: Gehäuseschulter
- 30: Klemmschraube
- 32: Anschlussbereich Ventilsitz
- 34: Anschlussbereich Ventilkäfig
- 36: Gewinde
- 37: Verschraubungsbereich
- 38: Schulter
- 40: Ausnehmung
- 42: Bund
- 44: Dichtungsschulter
- 46: Fase
- D_{K}: Ventilkäfiganschlussinnendurchmesser
- D_{V}: Ventilsitzanschlussaußendurchmesser
- D_{W1}: Anschlussbereichs-Wandstärke
- D_{W2}: Gewindebereichs-Wandstärke
- E: Einsteckbereich

## Patentansprüche

1. Ventilsitz-Käfiganordnung (18) umfassend einen Ventilkäfig (20) und einen Ventilsitz (22), wobei der Ventilsitz (22) in den Ventilkäfig (20) einschraubbar ist, wobei der Ventilkäfig (20) in einem Anschlussbereich (34) einen Ventilkäfiganschlussinnendurchmesser (D_{K}) aufweist, in den der Ventilsitz (22) in seinem Anschlussbereich (32) mit seinem Ventilsitzanschlussaußendurchmesser (Dv) eingreift und damit eine radiale Zentrierung bildet, einen Verschraubungsbereich (37) und eine Schulter (38), wobei die Schulter (38) als axialer Anschlag zwischen dem Ventilkäfig (20) und dem Ventilsitz (22) dient und der Ventilsitz (22) und der Ventilkäfig (20) mit einer axialen Anpresskraftkomponente aneinander gedrückt werden, wobei der Verschraubungsbereich zwischen dem Anschlussbereich (32) und der Schulter (38) liegt, wobei der Ventilkäfiganschlussinnendurchmesser (D_{K}) und der Ventilsitzanschlussaußendurchmesser (Dv) eine Passung bilden, so dass Ventilsitz und Ventilkäfig zentriert werden, wobei ein Dichtungselement (24) vorgesehen ist, das einen ersten Innendurchmesser aufweist, der auf den Durchmesser des Ventilkäfigs (20) in einem rückspringenden Bereich (40) abgestimmt ist **dadurch gekennzeichnet, dass**
das Dichtungselement (24) einen weiteren flanschartigen Bereich (42) aufweist, der sich in einen Bereich erstreckt, der durch die im Ventilsitz (22) angeordnete rückspringende Schulter (38) gebildet ist, wobei die Schulter (38) einen geringeren Außendurchmesser als der Durchmesser des rückspringenden Bereichs (40) des Ventilkäfigs (20) aufweist, wobei der flanschartige Bereich (42) des Dichtungselements (24) zwischen Ventilkäfig (20) und Ventilsitz (22) komprimiert wird und als axiale Dichtung zwischen dem Ventilkäfig (20) und dem Ventilsitz (22) wirkt.

2. Ventilsitz-Käfiganordnung nach Anspruch 1, **dadurch gekennzeichnet, dass** die Passung eine Spielpassung ist und maximal ein Spiel von 0,05 mm aufweist.

3. Ventilsitz-Käfiganordnung nach Anspruch 1 oder 2, **dadurch gekennzeichnet, dass** der Anschlussbereich (32) des Ventilsitzes an der dem Ventilkäfig zugewandten Seite des Verschraubungsbereichs (37) angeordnet ist.

4. Ventilsitz-Käfiganordnung (18) nach einem der vorangehenden Ansprüche, **dadurch gekennzeichnet, dass** die Wandstärke (D_{W1}) des Ventilsitzes (22) im Anschlussbereich, geringer als die Wandstärke (D_{W2}) im Schraubbereich ist.

5. Ventilsitz-Käfiganordnung (18) nach einem der vorangehenden Ansprüche, **dadurch gekennzeichnet, dass** das Dichtungselement (24) einen U- oder. V- förmig Querschnitt aufweist und eine Öffnung in Richtung des Ventilkäfigs (20) ausgerichtet ist.

6. Ventilsitz-Käfiganordnung (18) nach einem der vorangehenden Ansprüche, **dadurch gekennzeichnet, dass** die Dichtung U- oder V- förmig ausgebildet ist und eine Öffnung abgewandt vom Ventilkäfig (20) aufweist.

7. Ventilsitz-Käfiganordnung (18) nach einem der vorangehenden Ansprüche, **dadurch gekennzeichnet, dass** der der Anschlussbereich (32) des Ventilsitzes (22) im Übergang zum Ventilkäfig (20) einen Innendurchmesser (Ds) aufweist, der in etwa dem Innendurchmesser (D_{VK}) des Ventilkäfigs (20) wenigstens im an den Anschlussbereich (32) angrenzenden Bereich entspricht.

8. Ventil (10) umfassend einen Ventildeckel (14), ein Ventilgehäuse (12), wobei das Ventilgehäuse (12) einen Zufluss- und einen Abfluss- Anschluss und einen Übergangsbereich (26) mit einer zentralen Ausnehmung zwischen Zufluss- und Abfluss-Anschluss aufweist, wobei eine Ventilsitz-Käfiganordnung (18) nach einem der vorangehenden Ansprüche in das Ventilgehäuse (12) eingesetzt ist, wobei die Ventilsitz-Käfiganordnung (20) derart in das Ventilgehäuse (12) eingesetzt ist, dass der Übergangsbereich (26) des Ventilgehäuses mit einem Dichtungsbereich (B) überlappt, wobei ein Kolben innerhalb des Ventilkäfigs (20) geführt ist, der zusammen mit dem Ventilsitz (22) eine Abdichtlage einnehmen kann.

9. Ventil nach Anspruch 8, **dadurch gekennzeichnet, dass** das Ventilgehäuse (12) im Bereich des Übergangsbereichs (26) eine Gehäuseschulter (28) aufweist, an der sich der Ventilsitz (22) in Axialrichtung abstützten kann, so dass die Ventilsitz-Käfiganordnung (18) zwischen der Gehäuseschulter (28) und einem Ventilgehäusedeckel (14) geklemmt gehalten werden kann oder ein Durchrutschen des Ventilsitzes durch den Übergangsbereich vermieden wird.

10. Ventil nach einem der Ansprüche 8 bis 9, **dadurch gekennzeichnet, dass** im Dichtungsbereich (B) ein separates Dichtungselement (24) zwischen Ventilsitz-Käfiganordnung (18) und Übergangsbereich (26) eingebracht ist.

## Claims

1. Valve seat cage arrangement (18) comprising a valve cage (20) and a valve seat (22), wherein the valve seat (22) can be screwed into the valve cage (20), wherein the valve cage (20) has in a connection region (34) a valve cage connection inside diameter (_{DK}), in which the valve seat (22) engages in its connection region (32) with its valve seat connection outside diameter (_{DV}) and thus forms a radial centering,
a screw connection area (37) and a shoulder (38), wherein the shoulder (38) serves as an axial stop between the valve cage (20) and the valve seat (22) and the valve seat (22) and the valve cage (20) are pressed against each other with an axial contact force component, wherein the screw connection area is located between the connection area (32) and the shoulder (38), wherein the valve cage port inner diameter (_{DK}) and the valve seat port outer diameter (_{DV}) form a fit so that the valve seat and the valve cage are centered, wherein a sealing member (24) is provided having a first inner diameter matched to the diameter of the valve cage (20) in a recessed portion (40), **characterized in that** the Said sealing element (24) having a further flange-like portion (42) extending into a region formed by said recessed shoulder (38) disposed in said valve seat (22), said shoulder (38) having a smaller outer diameter than the diameter of said recessed portion (40) of said valve cage (20), wherein the flange-like portion (42) of the sealing element (24) is compressed between the valve cage (20) and the valve seat (22) and acts as an axial seal between the valve cage (20) and the valve seat (22).

2. The valve seat cage assembly of claim 1, **characterizedin** that the fit is a clearance fit and has a maximum clearance of 0.05 mm.

3. Valve seat cage assembly according to claim 1 or 2, **characterized in that** the connection area (32) of the valve seat is arranged on the side of the screw connection area (37) facing the valve cage.

4. Valve seat cage assembly (18) according to any one of the preceding claims, **characterized in that** the wall thickness (_{DW1}) of the valve seat (22) in the connection area, is less than the wall thickness (_{DW2}) in the screw area.

5. Valve seat cage assembly (18) according to any one of the preceding claims, **characterized in that** the sealing member (24) has a U- or V-shaped cross-section and an opening is oriented toward the valve cage (20).

6. Valve seat cage assembly (18) according to any one of the preceding claims, **characterized in that** the seal is U- or V-shaped and has an opening facing away from the valve cage (20).

7. Valve seat cage arrangement (18) according to any one of the preceding claims, **characterized in that** the connection region (32) of the valve seat (22) in the transition to the valve cage (20) has an inner diameter (_{DS}) which corresponds approximately to the inner diameter (_{DVK}) of the valve cage (20) at least in the region adjacent to the connection region (32).

8. Valve (10) comprising a valve cover (14), a valve housing (12), said valve housing having (12) having an inflow and an outflow port and a transition region (26) with a central recess between the inflow and outflow ports, wherein a valve seat cage assembly (18) according to any one of the preceding claims is inserted into the valve housing (12), wherein the valve seat cage assembly (20) is inserted into the valve housing (12) in such a way that the transition region (26) of the valve housing overlaps with a sealing region (B), wherein a piston is guided within the valve cage (20), which piston can take up a sealing position together with the valve seat (22).

9. Valve according to claim 8, **characterized in that** the valve housing (12) has a housing shoulder (28) in the region of the transition region (26), on which the valve seat (22) can be supported in the axial direction, so that the valve seat cage arrangement (18) can be held clamped between the housing shoulder (28) and a valve housing cover (14) or slipping of the valve seat through the transition region is prevented.

10. Valve according to any one of claims 8 to 9, **characterized in that** a separate sealing element (24) is introduced in the sealing area (B) between the valve seat-cage arrangement (18) and the transition area (26).

## Revendications

1. Ensemble de cage de siège de soupape (18) comprenant une cage de soupape (20) et un siège de soupape (22), dans lequel le siège de soupape (22) peut être vissé dans la cage de soupape (20), dans lequel la cage de soupape (20) présente dans une zone de raccordement (34) un diamètre de raccordement intérieur de cage de soupape (D_{K}), dans lequel le siège de soupape (22) s'insère dans sa zone de raccordement (32) avec son diamètre extérieur de raccordement de siège de soupape (D_{V}) et forme ainsi un centrage radial, une zone de vissage (37) et un épaulement (38), dans lequel l'épaulement (38) sert de butée axiale entre la cage de soupape (20) et le siège de soupape (22) et le siège de soupape (22) et la cage de soupape (20) peuvent être pressés l'un contre l'autre avec une composante de force de pression axiale, dans lequel la zone de vissage se situe entre la zone de raccordement (32) et l'épaulement (38), dans lequel la diamètre de raccordement intérieur de cage de soupape (D_{K}) et le diamètre extérieur de raccordement de siège de soupape (D_{V}) forment un ajustement, de sorte que le siège de soupape et la cage de soupape sont centrés, dans lequel un élément d'étanchéité (24) est prévu, qui présente un premier diamètre intérieur, qui est adapté au diamètre de la cage de soupape (20) dans une zone en retrait (40), **caractérisé en ce que** l'élément d'étanchéité (24) présente une autre zone de type bride (42), qui s'étend dans une zone qui est formée par les épaulements (38) en retrait disposés dans le siège de soupape (22), dans lequel l'épaulement (38) présente un diamètre extérieur plus petit que le diamètre de la zone en retrait (40) de la cage de soupape (20), dans lequel la zone de type bride (42) de l'élément d'étanchéité (24) est comprimée entre la cage de soupape (20) et le siège de soupape (22) et agit en tant que joint axial entre la cage de soupape (20) et le siège de soupape (22).

2. Ensemble de cage de siège de soupape selon la revendication 1, **caractérisé en ce que** l'ajustement est un ajustement avec jeu et présente au maximum un jeu de 0,05 mm.

3. Ensemble de cage de siège de soupape selon la revendication 1 ou 2, **caractérisé en ce que** la zone de raccordement (32) du siège de soupape est disposée sur la face de la zone de vissage (37) tournée vers la cage de soupape.

4. Ensemble de cage de siège de soupape (18) selon l'une quelconque des revendications précédentes, **caractérisé en ce que** l'épaisseur de paroi (D_{W1}) du siège de soupape (22) dans la zone de raccordement est inférieure à l'épaisseur de paroi (D_{W2}) dans la zone de vissage.

5. Ensemble de cage de siège de soupape (18) selon l'une quelconque des revendications précédentes, **caractérisé en ce que** l'élément d'étanchéité (24) présente une section transversale en forme de U ou de V et une ouverture est orientée en direction de la cage de soupape (20).

6. Ensemble de cage de siège de soupape (18) selon l'une quelconque des revendications précédentes, **caractérisé en ce que** le joint est réalisé en forme de U ou de V et présente une ouverture opposée à la cage de soupape (20).

7. Ensemble de cage de siège de soupape (18) selon l'une quelconque des revendications précédentes, **caractérisé en ce que** la zone de raccordement (32) du siège de soupape (22) dans la transition vers la cage de soupape (20) présente un diamètre intérieur (D_{S}), qui correspond à peu près au diamètre intérieur (D_{VK}) de la cage de soupape (20) au moins dans la zone adjacente à la zone de raccordement (32).

8. Soupape (10) comprenant un couvercle de soupape (14), un carter de soupape (12), dans lequel le carter de soupape (12) présente un raccord d'arrivée et un raccord d'évacuation et une zone de transition (26) avec un évidement central entre le raccord d'arrivée et d'évacuation, dans laquelle un ensemble de cage de siège de soupape (18) selon l'une quelconque des revendications précédentes est inséré dans le carter de soupape (12), dans laquelle l'ensemble de cage de siège de soupape (20) est inséré dans le carter de soupape (12) de telle sorte que la zone de transition (26) du carter de soupape chevauche une zone d'étanchéité (B), dans laquelle un piston est guidé à l'intérieur de la cage de soupape (20), qui peut occuper conjointement avec le siège de soupape (22) une position d'étanchéité.

9. Soupape selon la revendication 8, **caractérisée en ce que** le carter de soupape (12) présente dans la zone de la zone de transition (26) un épaulement de carter (28), sur lequel le siège de soupape (22) peut s'appuyer dans la direction axiale, de sorte que l'ensemble de cage de siège de soupape (18) peut être maintenu bloqué entre l'épaulement de carter (28) et un couvercle de carter de soupape (14) ou un glissement du siège de soupape à travers la zone de transition est évité.

10. Soupape selon l'une quelconque des revendications 8 à 9, **caractérisé en ce que** dans la zone d'étanchéité (B)un élément d'étanchéité (24) séparé est introduit entre l'ensemble de cage de siège de soupape (18) et la zone de transition (26).
